# EUROPEAN PATENT APPLICATION

(11) **EP 4 733 741 A1**
(43) Date of publication of application: **29.04.2026**
(21) Application number: 24222765.0
(22) Date of filing: 23.12.2024
(51) Int. Cl.: G01N 15/08, B01D 53/14, B01J 20/34

(54) **METHOD AND APPARATUS FOR TESTING LONG TERM HYDROTHERMAL STABILITY OF SORBENT MATERIALS**

(30) Priority: 28.10.2024 US 202463712823 P
(71) Applicant: Siemens Energy Global GmbH & Co. KG, 81739 München (DE)
(72) Inventor: Jamison, Susanne, Orlando, 32832 (US); Calabria, Dominick, Winter Park, 32792 (US); Cabral Moreira, Leticia, Kissimmee, 34746 (US)

(57) **Abstract**

A method for testing long term hydrothermal stability of a sorbent media includes the steps of determining an initial uptake capacity of a sorbent media, desorbing the sorbent media and exposing the sorbent media to pure steam in an aging vessel for a predetermined amount of time, after the predetermined amount of time, determining the aged uptake capacity of the sorbent media, comparing the initial uptake capacity with the aged uptake capacity to determine an amount of degradation that has occurred during the exposure to pure steam, calculating a service life of the sorbent media within a DAC unit. An aging vessel for exposing a sorbent media to steam includes at least one container, at least one lid, at least one port, an amount of water, at least one separating layer between the sorbent media and the amount of water, where the amount of water does not contact the sorbent.

## Description

### CROSS-REFERENCE TO RELATED APPLICATIONS

PCT/EP2023/051302

### BACKGROUND

While carbon dioxide (CO₂) is a naturally occurring chemical compound, which is present in the Earth's atmosphere, the increase of atmospheric CO₂ over the years has been linked to climate change. Efforts have been made to reduce CO₂ emissions via clean energy. Removing CO₂ from the atmosphere via negative emission technologies (NETs), including the process commonly referred to as carbon capture or direct air capture (DAC).

DAC units are being developed that make use of a fan to draw ambient air over a material to capture CO₂. Commonly, the material used is sorbent in a liquid or solid. These materials become saturated such that they cannot absorb or adsorb any more CO₂. After capturing the CO₂, typically heat is applied to the material to release the CO₂ (or any known method of desorption) where the CO₂ may be sequestered or processed further. The material is then used for further CO₂ capturing from ambient air. Thus, the typical DAC unit cycles between capturing CO₂ and releasing the CO₂. This cyclical transition is done by having multiple containers with the sorbent where at any time a portion of the containers is exposed to air to capture CO₂ and another portion is exposed to heat to release the CO₂. This cycle occurs with the material in situ, which is while the sorbent is retained in the DAC unit for both the CO₂ capture and the CO₂ release. These are large industrial type units which are designed to capture substantial amounts of released CO₂. For example, over 100 tons per year. As a result, they have a substantial footprint and are costly to build.

A major cost factor for all DAC units is the useful life or stability of the sorbent used by the DAC units. DAC units are relatively new and long term testing of new or potential sorbents is required. The Net negative CO2 reduction can be impacted by the service life of a sorbent, e.g. a situation where the DAC unit is producing more CO2 than is absorbed is to be avoided.

The long-term stability, and by extension useful lifespan, of carbon capture sorbents has received very little attention from academic and industrial researchers, especially in regard to hydrothermal stability. While stability is often cited as an important factor to consider, relatively few studies investigate the long-term stability of sorbents. When such tests are done, the number of cycles reported are in the tens of cycles. However, commercial adsorbents are expected to run for thousands or tens of thousands of cycles. This information is necessary for determining lifetime costs and efficacy of sorbent materials, which are both critical parameters for selecting a sorbent for use in carbon capture systems.

Direct air carbon capture is a very new industry, so most or all of the currently active systems are in developmental, or pilot stages and the long-term characteristics of the sorbents are not yet critical. Additionally, academic research has limited degradation testing to very short exposures or a very limited number of cycles of exposure and extrapolated this information to project long-term characteristics, but this method is highly uncertain and not of practical use in industry. To date, the methods described for rapid aging in steam in academic literature include flow-through apparatuses where steam at a specified temperature is continually passed over the sorbent (Min, 2017, Fayaz, 2017) or cyclic apparatuses where the sorbent is repeatedly subjected to a direct air capture cycle (Bos, 2019, Wijesiri, 2019). Both methods require somewhat complicated set ups and in many cases a lot of labor, thus the length of steam exposure is severely limited.

### BRIEF SUMMARY

It is therefore a goal of the present invention to provide a method and apparatus for the rapid aging of sorbent materials and the testing of baseline sorbent uptake of CO₂ versus aged sorbent uptake of CO₂ which overcomes the above-mentioned disadvantage(s). The present invention overcomes the disadvantages of additional variables in the aging of sorbent medias by exposing the sorbent media to only pure steam in an aging vessel. The aging process of the present invention is advantageously conducted at static conditions, which reduces costs and complexity over cyclical aging methods.

The objective of the invention is achieved by a method for testing long term hydrothermal stability of a sorbent media includes the steps of determining an initial uptake capacity of a sorbent media, desorbing the sorbent media and exposing the sorbent media to pure steam in an aging vessel for a predetermined amount of time during an aging cycle, after the predetermined amount of time, determining the aged uptake capacity of the sorbent media, comparing the initial uptake capacity with the aged uptake capacity to determine an amount of degradation that has occurred during the exposure to pure steam, calculating a service life of the sorbent media within a DAC unit. The method advantageously can be used to calculate a maximum service life of a sorbent media. The method has an advantage that the aging process requires a very simple set up and extremely limited monitoring. The method advantageously does not require cycling of the level of steam exposure, pressure, or temperature during the aging process/cycle, e.g. long-term static exposure of the sorbent media during the aging cycle.

In an embodiment, a method for testing long term hydrothermal stability of a sorbent media includes the steps of configuring an adsorption/desorption rig to perform the adsorption and desorption of the sorbent media, desorption of the sorbent media in the adsorption/desorption rig to determine an initial dry weight of the sorbent media during a desorption cycle, exposing the sorbent media to a carbon dioxide containing gas until an initial maximum adsorption capacity is achieved in the adsorption/desorption rig to simulate exposure to atmospheric air, measurement of the carbon dioxide uptake capacity of the sorbent media to determine an initial uptake capacity, returning the sorbent media to the initial dry weight by desorption in the adsorption/desorption rig, configuring an aging vessel for long-term exposure of the sorbent media to pure steam at an elevated temperature and exposing the sorbent media to pure steam for a predetermined amount of time, desorption of the sorbent media in the adsorption/desorption rig to determine an aged dry weight of the sorbent media during the desorption cycle, exposing the sorbent media to the carbon dioxide containing gas until an aged maximum adsorption capacity is achieved in the adsorption/desorption rig to simulate exposure to atmospheric air, measurement of carbon dioxide uptake capacity of the sorbent media to determine an aged uptake capacity, comparison of the initial uptake capacity and the aged uptake capacity of the sorbent media to determine the degree of degradation.

The method may also include where the carbon dioxide containing gas is compressed air.

The method may also include where the carbon dioxide containing gas is a test gas comprising a mixture of CO₂ and N₂ to simulate atmospheric air. A test gas advantageously does not contain water or water vapor, which prevents the adsorption of water vapor by the sorbent during adsorption of CO₂.

The method may also include where the adsorption/desorption rig is configured to preheat prior to the desorption cycles. Preheating the adsorption/desorption rig advantageously brings the components of the adsorption/desorption rig to a desorption temperature prior to introduction of the sorbent media, reducing the amount of time to bring the sorbent media to the desorption temperature.

The method may also include where the adsorption/desorption rig is configured to dry the sorbent media after the desorption cycle.

The method may also include where the adsorption/desorption rig is configured to use ultra high purity N₂ during preheating or the desorption cycles. The use of ultra high purity N₂ advantageously does not introduce water vapor to the adsorption/desorption rig or the sorbent media within.

In one embodiment, a system for exposing a sorbent media to steam within an aging vessel includes at least one container, at least one sealing lid, at least one port, an amount of water, boiling the amount of water within the container to produce an amount of steam, evacuating the at least one container with the amount of steam until only steam is surrounding the sorbent media, configuring the sorbent media within the at least one container from contacting the amount of water that has not been converted to steam. The system advantageously removes all other gases and potential contaminants from the aging vessel and prevents the sorbent media from contacting the water during the aging process. The water is advantageously a pure water source, such as deionized or demineralized water, to prevent the introduction of contaminants to the sorbent.

In one embodiment, the aging vessel may also include at least two containers in fluid communication via a communication tube attached to a communication port in each of the at least two containers, where the amount of water is contained within only one of the at least two containers and the communication tube configured to be above a water line of the amount of water to prevent the amount of water from transferring into the other of the at least two containers which contains the sorbent media.

In one embodiment, the aging vessel may also include at least one layer of separating material. A first layer of separating material may advantageously be a layer of hydrophobic frit that includes pours large enough to allow steam to circulate but small enough to prevent the sorbent media from passing through. A second layer of separating material may advantageously be a layer of course frit. The course frit may advantageously be positioned between the water and the hydrophobic frit and physically prevent a water level from rising above the hydrophobic frit and or course frit.

In an embodiment, an aging vessel for exposing a sorbent media to steam includes at least one container, at least one sealing lid, at least one port, an amount of water, at least one separating layer between the sorbent media and the amount of water, where the amount of water does not contact the sorbent media. The aging vessel advantageously allows for the removal of all other gases and potential contaminants from the aging vessel and prevents the sorbent media from contacting the water during the aging process.

In one embodiment the methods can be used to improve models for the direct air capture units being built to get a more accurate expectation of performance and select sorbents with better cost performance over the long term.

In one embodiment the method described here can advantageously be used as a service to sorbent developers as a standardized way to test the hydrothermal stability of various sorbents.

Similar adsorption/desorption apparatuses and methods as described here are well known in the industry. The novel part of this invention is the static exposure of a sorbent to a pure steam environment. This approach is simple from a machinery perspective, has a lower labor requirement, and allows for long exposure times at low cost. Simplifying the exposure of a sorbent to steam allows for quick screening of potential direct air carbon capture DAC sorbents for hydrothermal stability, as well as allowing for the determination the thermal stability limits of individual sorbents to steam exposure.

Other technical features may be readily apparent to one skilled in the art from the following figures, descriptions, and claims.

### TERMS AND DEFINITIONS

Unless specified, the terms absorption and adsorption can be used to mean any sorption process. Both can be used to describe DAC processes. In DAC applications, absorption is used to refer to the process by which carbon dioxide is attracted to the sorbent and becomes evenly distributed throughout the whole body of the absorbate material. This is most commonly understood to occur when the sorbent is in the liquid or aqueous state. The term adsorption is used to refer to the process when carbon dioxide is attracted to the sorbent and becomes distributed on the surface of the sorbent. For the purpose of this document the term adsorption has been used. However, this does not imply that absorption cannot also occur.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an adsorption/desorption rig in accordance with one embodiment.
FIG. 2 illustrates an indirect heat rig in accordance with one embodiment.
FIG. 3 illustrates a sorbent aging vessel in accordance with one embodiment.
FIG. 4 illustrates a sorbent aging vessel with two containers in accordance with one embodiment.
FIG. 5 illustrates a sorbent aging vessel with two containers and layers of frit in accordance with one embodiment.
FIG. 6 illustrates another sorbent aging vessel in accordance with one embodiment.
FIG. 7 illustrates a configuration for evacuating an aging vessel in accordance with one embodiment.
FIG. 8 illustrates a configuration for evacuating an aging vessel with an indirect heating rig in accordance with one embodiment.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to apparatus and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus.

It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, unless specified or limited otherwise, the terms "mounted", "connected", "supported", and "coupled" and variations thereof are used broadly and encompass direct and indirect mountings, connections, supports, and couplings. Further, "connected" and "coupled" are not restricted to physical or mechanical connections or couplings.

In addition, the term "adjacent to" may mean: that an element is relatively near to but not in contact with a further element; or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard as available a variation of 20 percent would fall within the meaning of these terms unless otherwise stated.

In one embodiment a method of rapid aging a sorbent media under steam conditions using prolonged static exposure to steam at a desired temperature, pressure, and length of time. The method has an advantage that the aging process requires a very simple set up and extremely limited monitoring. The full setup requires at least two discrete subsystems: a) a subsystem which measures the uptake capacity of a sample of sorbent before and after a period of steam exposure. This subsystem is referred to as the adsorption/desorption rig 100 and reproduces/simulates the adsorption and desorption cycles of a DAC unit; b) a container or vessel that is vacuum tight and thermally stable (insulated), configured to allow the sorbent to be exposed by steam, but not water or air (a pure steam environment). This is referred to as an aging vessel 300; c) in some embodiments a third subsystem can be used to desorb the sorbent sample(s) using an indirect heating method, and also preparing multiple aging vessels synchronously. This subsystem is referred to as the indirect heating rig 200.

The adsorption/desorption rig 100 is similar to that used by currently known methods in the art as it is designed to simulate the functions of a DAC unit. However, its use is an essential in the first step of this method as is thus described in detail here. In an embodiment the method of aging a sorbent sample advantageously requires limited use of the adsorption/desorption rig 100. In one embodiment the adsorption/desorption rig 100 is only used twice for each sample, rather than continually cycling the sorbent as in previously known methods for rapid aging of DAC sorbents. In one embodiment, a method of static exposure of DAC sorbents to pure steam in an aging vessel at a known temperature and pressure for a desired amount of time.

An overview of the full method for rapid hydrothermal aging is: a) the measurement of carbon dioxide uptake capacity of a fresh sorbent sample, b) long-term exposure of sorbent to pure steam at elevated temperature, c) measurement of carbon dioxide uptake capacity of the aged sorbent sample, and d) comparison of fresh and aged samples uptake capacity to determine the degree of degradation.

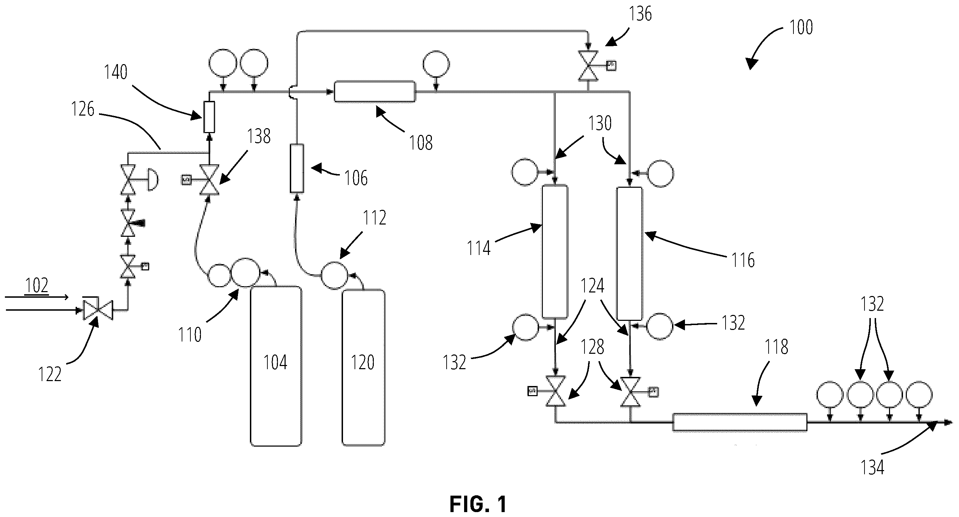

In a first step of the method, the uptake capacity is measured using the adsorption/desorption rig 100. The adsorption/desorption rig 100 consists of at least two source gases with various compositions (optionally three or more gases can be used), flow and temperature control systems, a container forcing the gas(s) to flow through a bed of sorbent or sorbent media 304, flow measurement instrumentation, temperature measurement instrumentation, and instruments for analyzing the composition, temperature and pressure of the output gas. See FIG. 1 for a diagram of the adsorption/desorption rig 100. The gases used are: a) a compressed air 102, b) an ultra-high purity N₂ or UHP N2 104, and c) a CO₂/N₂ or test gas 120 source. In one embodiment compressed air 102, test gas 120 or N₂ are used to preheat the components of the adsorption/desorption rig 100. In an embodiment UHP N2 104 is used for heating the sorbent media 304 sample in the drying and desorption process. In an embodiment compressed air 102 and or test gas 120 are used to simulate atmospheric air for the adsorption process. In an embodiment compressed air 102, test gas 120 and UHP N2 104 are used independently or in combination with one another during the steps of the method.

The uptake capacity is measured via the following sequence of steps: a) preheating, b) desorption and drying, c) adsorption, and d) measurement/calculation of adsorbed carbon dioxide.

Preheating: a valve 122 opens to allow compressed air 102 from a compressed air line to flow into the adsorption/desorption rig 100, and sorbent control valves 128 open in each sorbent sample line, first sorbent column 114 and second sorbent column 116, to allow flow through them to the sorbent outlet 124. A flow control valve or test gas flow controller limits the flow to a value appropriate for the gas heater 108, ideally as high as possible before the gas heater 108 outlet temperature starts to drop. The gas, in this embodiment compressed air 102 is brought to temperature in a gas heater 108, then sent to flow through the adsorption/desorption rig 100 and preheat the piping 126 downstream of the gas heater 108. The sorbent sample or sorbent media 304 has not been installed yet into the first sorbent column 114 or the second sorbent column 116, so a bypass line (can be an empty pipe or tube configured to match the size and connections of the sorbent media 304 container) can be installed to ensure the gas flows through the entire system. Once the temperature at the inlet of the first sorbent column 114 and second sorbent column 116 has reached the operating temperature, the gas heater 108 is shut off, the compressed air valve and sorbent selecting valves are closed, and the system moves to the next stage.

Desorption/drying: In order to determine the baseline uptake of a sorbent media 304 sample, the sorbent media 304 is desorbed to ensure maximum uptake during later steps, the sorbent media 304 may have adsorbed carbon dioxide and water vapor during transport and storage. The bypass line is replaced with the sorbent media 304 in a fritted tube, in one embodiment a chromatography column filled with sorbent media 304. Then a N2 valve 138 opens to allow pure nitrogen to flow through the system from an ultra-pure nitrogen source or UHP N₂ 104, the sorbent control valves 128 are opened, and the N₂ flow controller 140 is set to a flow appropriate for flowing through the sorbent media 304. The gas heater 108 is turned on and off to modulate the temperature at the sorbent inlet 130 of the sorbent tubes 114 and 116. This temperature is set just below the maximum the sorbent media 304 can handle in an inert atmosphere without degradation, as determined by previous tests. The hot gas dries the sorbent media 304 and forces it to desorb any CO₂ and H2O, prepping it for further testing. When the humidity and CO₂ concentration sensors 132 at the system outlet 134 of the system show low to no water and CO₂ flowing, the sorbent has been fully dried and desorbed. The gas heater 108 is turned off and UHP N₂104 continues to flow until the temperature of the sorbent media 304 samples drop below 40°C, at which point they can safely be exposed to atmosphere. Then all valves are closed and the first sorbent column 114 and or second sorbent column 116 containing the sorbent media 304 is/are removed from the apparatus and weighed to determine what is referred to in the art as the dry mass of the sorbent, the point where the sorbent media 304 is ready for maximum uptake.

Adsorption: The first sorbent column 114 and second sorbent column 116 containing the sorbent media 304 are returned to the adsorption/desorption rig 100. A mixture valve 136 opens to allow the pre-mixed CO₂/N₂blend to flow through the system, one of the sorbent control valves 128 is opened, so that the gas flows through a single sorbent column at a time. The N₂ controller 140 is set to a flow appropriate for flowing through the sorbent media 304. When the CO₂ concentration at the sorbent outlet 124 reaches the same level as the known concentration of the gas mixture at the sorbent inlet 130, the adsorption is complete and the sorbent control valves 128 are actuated such that the next sorbent column is selected, and the same process is repeated until all of the sorbent columns have completed the adsorption cycle. The adsorption/desorption rig 100 has sensors 132 that measure the instantaneous CO₂ concentration, instantaneous water vapor concentrations, temperature, and the instantaneous mass flow at various locations within the system or adsorption/desorption rig 100. The instantaneous CO2 concentration and instantaneous mass flow measurements are combined and summed over the duration of the adsorption step to measure the total CO2 adsorbed by the sorbent media 304 sample(s). In another embodiment of this process or step, compressed air 102 can be used instead of a premixed gas. In this case, an additional sensor 132 is installed on the process line upstream of the sorbent columns and the adsorption is known to be complete with the downstream water and carbon dioxide concentrations are equal to the upstream ones. The sorbent media 304 in this embodiment would adsorb CO2 and water as both are contained within in the compressed air 102. The embodiments that used the CO2/N2 or test gas 120 advantageously do not adsorb water as it is not present in the test gas 120.

In an embodiment, the desorption and drying steps of the method can be accomplished using the indirect heating rig 200. This subsystem consists of an isothermal water bath held at a water line 216 and at an elevated temperature with an immersion heater 210 and a water circulator 206, a vacuum manifold 204 with multiple connection ports to flasks or sorbent containers 212 holding sorbent media 304. In an embodiment the elevated temperature is in a range between 80-95°C or at least 80°C. The sorbent containers 212 are submerged into the tank 214 to a position at or below the water line 216, the water circulator 206 and immersion heater 210 maintain a uniform temperature within the tank 214. In one embodiment the tank 214 is completely filled with water.

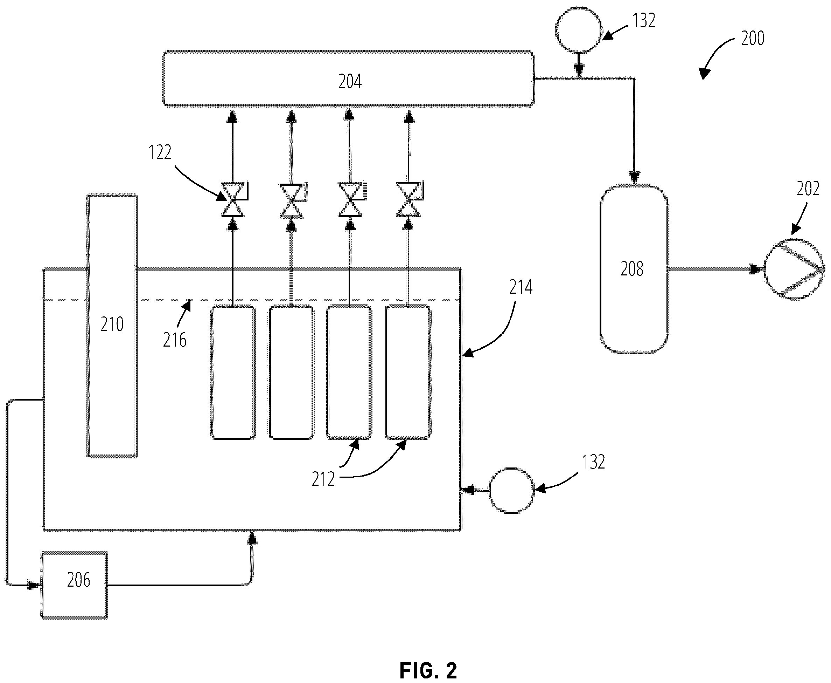

The vacuum manifold 204 can be connected in parallel or in sequence or in any combination to connect to the sorbent containers 212 to the vacuum pump 202. The indirect heating rig 200 includes a vacuum pump 202, a pressure sensor 132, and a condenser 208. See FIG. 2. During operation, the vacuum pump 202 produces a vacuum that is held at the lowest possible level of vacuum for the vacuum pump 202. In an embodiment the pressure supplied by the vacuum pump 202 is 0.4 mbar(a) or lower (higher level of vacuum). The process of drying/desorption is accomplished by turning on the vacuum pump 202 and holding the sorbent media 304 at an elevated temperature and vacuum conditions until CO2 and/or water (if water is present in the sorbent media 304) is fully desorbed from the sorbent media 304.

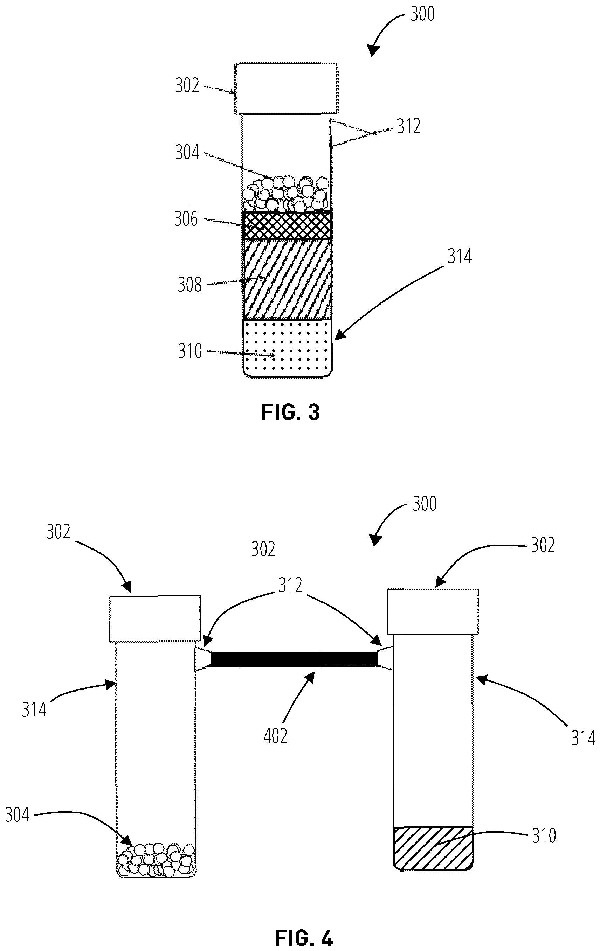

In a second step of the method, the sorbent media 304 sample is transferred into an aging vessel 300 which is composed of a vacuum tight container or container 314 with a double layered foam frit holding the sorbent media 304 sample above a reservoir of distilled water 310. See FIG. 3 The bottom layer of the frit is made of a steam-stable open-cell foam with large pore sizes or coarse frit 308, used to suspend the sorbent media 304 well above the water 310. The top layer of the frit or hydrophobic frit 306 is composed of a hydrophobic foam with a small pore size which allows the passage of steam but does not allow water to reach the sorbent and does not wick water towards the sorbent media 304. A vacuum port 312 on the aging vessel 300 is attached a vacuum manifold 204 and vacuum pump 202, the vacuum port 312 may include a valve for sealing the aging vessel 300 as known in the art. The aging vessel 300 is closed off with a sealing lid or sealing lid 302. The sorbent media 304 sample is exposed to vacuum while held at a reduced temperature, until the water boils. The water 310 is allowed to boil for a few minutes to ensure the air is evacuated and the gas left in the container 314 is purely steam. Under vacuum pressure, the distilled water boils creating a steam environment in the aging vessel 300. The aging vessel 300 is then sealed with the seal or sealing lid 302 and or port 312 while the sorbent media 304 is still under vacuum pressure.

In one embodiment, the aging vessel 300 includes at least one layer of frit or other known material in the art configured to keep the sorbent and water separated but allows steam to pass through the at least one layer. In one embodiment the aging vessel 300 has a single layer of frit that does not wick water and has pores small enough to suspend the sorbent but large enough to pass steam. In one embodiment the aging vessel 300 has a single layer of frit wedged in the container 314 such that it does not touch the water and allow wicking, e.g. suspended above the water line within the aging vessel 300.

The sorbent media 304 samples are then placed in an isothermal environment for a specified duration. In one embodiment the temperature of the sorbent media 304 is elevated and maintained at 80°C for two months, other sorbents or tests may require different parameters, such as temperature, pressure (vacuum) and duration. The water vaporizes within the aging vessel 300 to create an internal pressure in the aging vessel 300 equal to the vapor pressure of water at the temperature of exposure. The sorbent media 304 is thus exposed to a pure steam environment at a given temperature. This method thus allows the effect of steam exposure on the degradation of a sorbent media 304 to be isolated from other mechanisms of degradation.

In one embodiment of an aging vessel 300 would be two containers 314, one containing the sorbent media 304 sample and one containing distilled water 310, which are connected by tubing or tube 402 to allow steam to travel from the water vessel to the sorbent vessel or container 314. See FIG. 4. The vacuum tight sealing lid 302 in this case can be half closed in order to seal the container 314 from the atmosphere but allows gases to communicate between the two containers 314 or they can be fully sealed to eliminate the transfer of gases into and out of the individual containers 314, the ports 312 are open and closed as need. In an embodiment, the container 314 holding the sorbent media 304 is evacuated completely to the lowest possible pressure to remove the maximum possible amount of air, then the vacuum tight lid 302 is fully sealed. The container 314 holding the water 310 is evacuated as well while held at a reduced temperature, until the water boils. The water 310 is allowed to boil for a few minutes to ensure the air is evacuated and the gas left in the container 314 is purely steam. Then the vacuum tight cap 302 is fully sealed as well. Both containers 314 are placed in an isothermal chamber at elevated temperature. After the containers and contents have reached the temperature of the chamber, they are connected with a very short tube 402. The sealing lid 302 and or port 312 of each container 314 are opened halfway, keeping the system closed to air, but allowing the communication of steam between the two containers 314. In one embodiment, this was achieved by modifying off the shelf Schlenk tubes with an additional seal to allow the vessel to remain airtight when the side arm is open to another vessel or container 314.

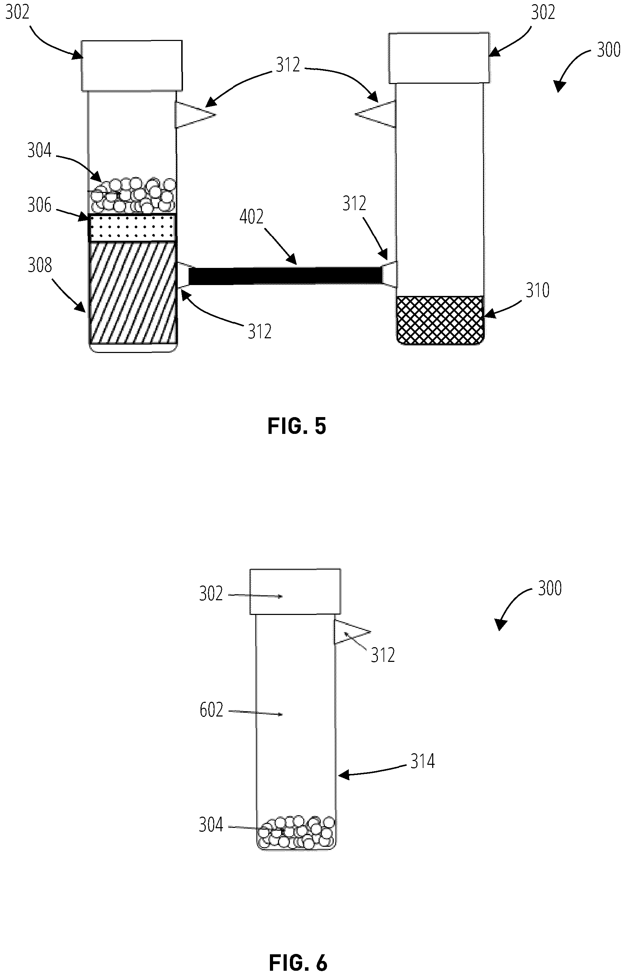

In one embodiment of an aging vessel 300 would be two containers 314, one containing the sorbent media 304 sample and one containing water 310, which are connected by tubing 402 to allow steam to travel from the water vessel to the sorbent vessel. See FIG. 5. The sorbent media 304 sample is supported by a hydrophobic frit 306 and the connection, tube 402, to the water vessel would be underneath the sorbent media 304 sample - this allows the steam to push any residual non-condensable gases into the headspace of the sorbent vessel where it won't interfere with any sorbent-steam interactions or purged/evacuated via the port 312.

In one embodiment of an aging vessel 300 consists of a single aging vessel 300 containing only sorbent media 304 and steam 602 with no liquid water. See FIG. 6. To ensure the atmosphere in the aging vessel 300 remains saturated with steam the sorbent media 304 must first be completely saturated with steam, then the airspace or empty space within the container 314 is filled with steam 602 at saturation temperature for the desired test pressure. The aging vessel 300 can be emptied of atmospheric gases and filled with steam at the desired temperature and pressure using the indirect heating rig 200.

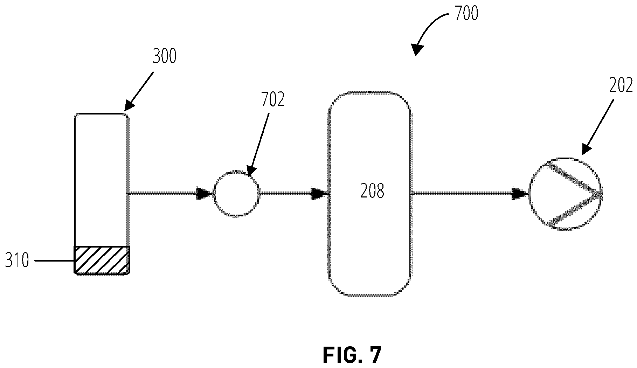

A configuration for the purging and or evacuating of the aging vessel 300 is shown in FIG. 7. The aging vessel 300 contains an amount of deionized water 310 and is put in fluid communication with a cold sink or condenser 208 and a vacuum pump 202. At a minimum, a pressure sensor 702 is placed in a position to measure the pressure or vacuum of the aging vessel 300 and or condenser 208. Additional sensors, such as temperature, flow rate, moisture, or any other sensor known in the art can be added to this evacuation rig 700 or any of the rigs. The vacuum pump 202 is turned on and evacuates the aging vessel 300 and continues until the pressure within the aging vessel 300 causes the water 310 to boil, for a given temperature of the water 310. The steam purges the aging vessel 300 of any gas previously within the container 314 of the aging vessel 300. The sealing lid 302 and or port 312 of the aging vessel 300 is then closed. The aging vessel 300 is then ready for the aging process within an isothermal chamber. The isothermal chamber can be any known configuration that can provide and maintain a desired temperature for the time period required by the aging process. The isothermal chamber can be an indirect heating rig 200, an oven or any other known configuration known in the art.

The configuration of the indirect heating rig 200 can be modified to include a flask 704 for use with the procedure for purging the aging vessel 300 or sorbent container 212.

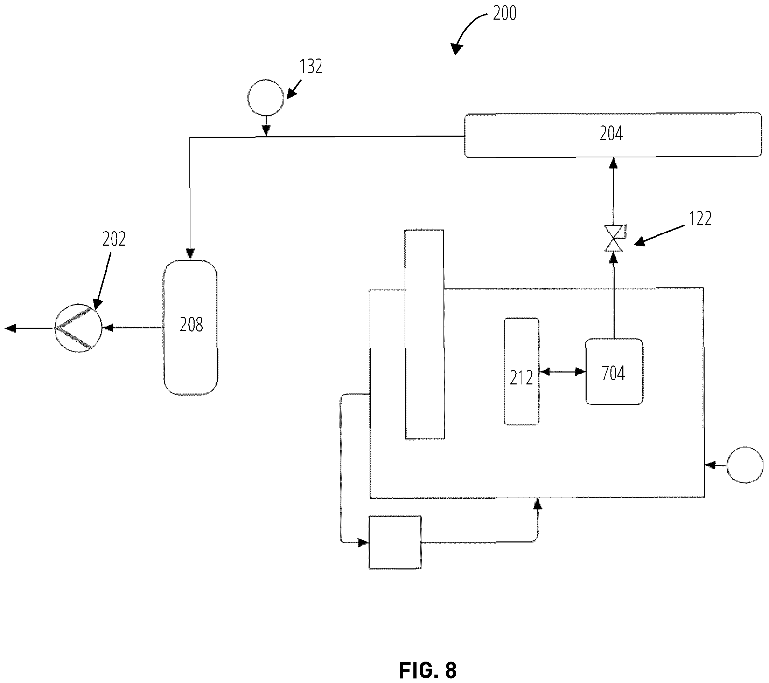

Referring to FIG. 8, the aging vessel 300 or sorbent container 212 can be emptied of atmospheric gases and filled with steam at the desired temperature and pressure using the indirect heating rig 200. The aging vessel 300 and sorbent container 212 may be identical or perform the same functions in this configuration. This is done by connecting the aging vessel 300 filled with sorbent media 304 to a flask 704 filled with deionized water kept at the same temperature as the sorbent media 304 and the isothermal chamber (in the indirect heating rig 200 the water) or aging vessel 300. The steam flask 704 is connected to the vacuum pump 202, the steam flask 704 is in-between the sorbent container 212 and the vacuum manifold 204. The atmosphere is removed from the aging vessel 300 or sorbent container 212 by use of the vacuum pump 202. The steam flask 704 is also evacuated, causing the water the boil into steam which fills the evacuated space in both the steam flask 704 and the aging vessel 300 or sorbent container 212. After a few minutes the vacuum pump 202 is turned off and the valve(s) 122 are adjusted such that the steam flask 704 and sorbent media 304 filled aging vessel 300 are closed off from the rest of the system, but steam is able to travel between the aging vessel 300 and steam flask 704. The sorbent media 304 is then allowed to adsorb steam until it reaches equilibrium. After reaching equilibrium, the sorbent saturated with adsorbed water, is sealed off from the steam flask 704, the vacuum pump 202, and the atmosphere with a vacuum tight sealing lid 302 or closure of the port 312. The sorbent container 212 or aging vessel 300 is then placed in an isothermal chamber or indirect heating rig 200 for the desired duration.

In a third step of the method, the uptake capacity of the aged sorbent media 304 sample is measured. After the specified amount of time for steam exposure, the sorbent media 304 samples are removed from the isothermal chamber, allowed to cool, and transferred to the adsorption/desorption rig 100 or indirect heating rig 200 described above to be desorbed of water. Then, the same process is conducted to determine the difference in uptake capacity of the sorbent media 304 before and after prolonged steam exposure.

In a final step of the method, the initial uptake capacity of the sorbent media 304 is compared with the aged uptake capacity of the sorbent media 304 to determine a level of degradation that has occurred to the sorbent media 304 during the predetermined amount of time that the sorbent media 304 was exposed to pure steam 602 within an aging vessel 300.

Although various embodiments that incorporate disclosed concepts have been shown and described in detail herein, those skilled in the art can readily devise many other varied embodiments that still incorporate these disclosed concepts. Disclosed embodiments are not limited to the specific details of construction and the arrangement of components set forth in the description or illustrated in the drawings. Disclosed concepts may be implemented by other implementations, and of being practiced or of being carried out in various ways, which now would become apparent to one skilled in the art.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A method for testing long term hydrothermal stability of a sorbent media (304) comprising the steps of:
determining an initial uptake capacity of a sorbent media (304),
desorbing the sorbent media (304) and exposing the sorbent media (304) to pure steam in an aging vessel (300) for a predetermined amount of time,
after the predetermined amount of time, determining the aged uptake capacity of the sorbent media (304),
comparing the initial uptake capacity with the aged uptake capacity to determine an amount of degradation that has occurred during the exposure to pure steam,
calculating a service life of the sorbent media (304) within a DAC unit.

2. Method for testing long term hydrothermal stability of a sorbent media (304) comprising the steps of:
(a) configuring an adsorption/desorption rig (100) to perform the adsorption and desorption of the sorbent media (304),
(b) desorption of the sorbent media (304) in the adsorption/desorption rig (100) to determine an initial dry weight of the sorbent media (304) during a desorption cycle,
(c) exposing the sorbent media (304) to a carbon dioxide containing gas until an initial maximum adsorption capacity is achieved in the adsorption/desorption rig (100) to simulate exposure to atmospheric air,
(d) measurement of the carbon dioxide uptake capacity of the sorbent media (304) to determine an initial uptake capacity,
(e) returning the sorbent media (304) to the initial dry weight by desorption in the adsorption/desorption rig (100),
(f) configuring an aging vessel (300) for long-term exposure of the sorbent media (304) to pure steam at an elevated temperature and exposing the sorbent media (304) to pure steam for a predetermined amount of time during an aging cycle,
(g) desorption of the sorbent media (304) in the adsorption/desorption rig (100) to determine an aged dry weight of the sorbent media (304) during the desorption cycle,
(h) exposing the sorbent media (304) to the carbon dioxide containing gas until an aged maximum adsorption capacity is achieved in the adsorption/desorption rig (100) to simulate exposure to atmospheric air,
(i) measurement of carbon dioxide uptake capacity of the sorbent media (304) to determine an aged uptake capacity,
(j) comparison of the initial uptake capacity and the aged uptake capacity of the sorbent media (304) to determine the degree of degradation.

3. The method of claim 2 wherein the aging vessel (300) is configured to prevent the sorbent media (304) from coming into contact with water.

4. The method of claim 2 wherein the carbon dioxide containing gas is compressed air.

5. The method of claim 2 wherein the carbon dioxide containing gas is a test gas (120) comprising a mixture of CO₂ and N₂ to simulate atmospheric air.

6. The method of claim 5 wherein the sorbent media (304) is not exposed to water or water vapor during adsorption.

7. The method of claim 2 wherein the adsorption/desorption rig (100) is configured to preheat prior to the desorption cycles.

8. The method of claim 2 wherein the adsorption/desorption rig (100) is configured to dry the sorbent media (304) after the desorption cycle.

9. The method of claim 7 wherein the adsorption/desorption rig (100) is configured to use ultra high purity N₂ during preheating or the desorption cycles.

10. A system for exposing a sorbent media (304) to steam within an aging vessel (300) comprising:
at least one container (314),
at least one sealing lid (302),
at least one port (312),
an amount of water,
boiling the amount of water within the container (314) to produce an amount of steam,
evacuating the at least one container (314) with the amount of steam until only steam is surrounding the sorbent media (304),
configuring the sorbent media (304) within the at least one container (314) from contacting the amount of water that has not been converted to steam.

11. The aging vessel (300) of claim 10 comprising at least two containers (314) in fluid communication via a communication tube (402) attached to a communication port (312) in each of the at least two containers (314),
wherein the amount of water is contained within only one of the at least two containers (314) and the communication tube (402) configured to be above a water line of the amount of water to prevent the amount of water from transferring into the other of the at least two containers (314) which contains the sorbent media (304).

12. The aging vessel (300) of claim 10 further comprising at least one layer of separating material.

13. The aging vessel (300) of claim 10 wherein the at least one layer of separating material is a hydrophobic frit (306).

14. The aging vessel (300) of claim 13 further comprising a second layer of coarse frit (308).

15. An aging vessel (300) for exposing a sorbent media (304) to steam comprising:
at least one container (314),
at least one sealing lid (302),
at least one port (312),
an amount of water (310),
at least one separating layer between the sorbent media (304) and the amount of water,
wherein the amount of water (310) does not contact the sorbent media (304).
